Europäisches Patentamt

European Patent Office

Office européen des brevets

(11) Veröffentlichungsnummer: **0 110 870**
A2

(12) **EUROPÄISCHE PATENTANMELDUNG**

(21) Anmeldenummer: 83890208.8

(22) Anmeldetag: 14.11.83

(51) Int. Cl.³: **B 60 S 3/04**

(30) Priorität: 22.11.82 AT 4240/82

(43) Veröffentlichungstag der Anmeldung: 13.06.84
Patentblatt 84/24

(84) Benannte Vertragsstaaten: BE CH DE FR GB IT LI LU NL SE

(71) Anmelder: VEROPA DKFM. PETER VOGT K.G.
Erzeugung von Kunststoffartikeln, Boerhaavegasse 7,
A-1031 Wien (AT)

(72) Erfinder: Vogt, Peter, Dipl.-Kaufmann,
Dannebergplatz 9, A-1030 Wien (AT)
Erfinder: Hoffelner, Volkwin, Hötzendorfergasse 10A,
A-3423 St. Andrä-Wördern (AT)

(74) Vertreter: Köhler-Pavlik, Johann, Dipl.-Ing.,
Margaretenplatz 5, A-1050 Wien (AT)

(54) **Waschvorrichtung.**

(57) Waschvorrichtung mit einer Flüssigkeitsregulier- und Absperreinrichtung (1) und einem an diese angeschlossenen Verlängerungsrohr, wobei die Regulier- und Absperreinrichtung ein Eintritts-Ansatzstück (25) und ein Austritts-Ansatzstück (23) für die Flüssigkeitszufuhr und -abfuhr aufweist. Die beiden Ansatzstücke (23, 25) sind jeweils mit zumindest einem männlichen und/oder weiblichen Kupplungsteil versehen. Das Austritts-Ansatzstück kann als Sprühdüse ausgebildet sein. Die beiden Ansatzstücke (23, 25) stehen im Winkel zueinander. Das Verlängerungsrohr (32) ist an seinen Enden mit gleichartigen männlichen und bzw. oder weiblichen Kupplungsteilen versehen, so dass es wahlweise an das eine oder an das andere Ansatzstück (23, 25) anschliessbar ist.

EP 0 110 870 A2

ACTORUM AG

## Waschvorrichtung

Die Erfindung betrifft eine Waschvorrichtung mit einer Flüssigkeitsregulier- und Absperreinrichtung und einem an diese angeschlossenem Verlängerungsrohr, wobei die Regulier- und Absperreinrichtung ein Eintritts-Ansatzstück und ein Austritts-Ansatzstück für die Flüssigkeitszufuhr und -abfuhr aufweist, welche beiden Ansatzstücke jeweils mit zumindest einem männlichen und/oder weiblichen Kupplungsteil versehen sind und wobei das Austritts-Ansatzstück gegebenenfalls als Sprühdüse ausgebildet ist.

Waschvorrichtungen dieser Art sind durch die DE-PS 458 315 bekannt geworden. Sie besitzen ein Zulaufrohr, welches an seinen beiden Enden ein Außengewinde aufweist. An das eine Gewinde wird der Schlauch zur Zuführung der Waschflüssigkeit angeschlossen, während das andere Gewinde einen aufschraubbaren Kopf trägt, in dem ein Hahnkücken drehbar gelagert ist, mit dem die Flüssigkeitszufuhr geregelt werden kann. Der Nachteil dieser Vorrichtung besteht darin, daß sie nur eine einzige Gestalt annehmen kann, die sowohl für das Waschen des Daches, als auch des Unterbodens oder der Seitenwände eines Fahrzeuges ermöglicht.

Durch die AT-PS 332 186 ist ein absperrbares Schlauchansatzstück mit zur Abgabe eines Sprühstrahls verstellbarer Ausfluß- bzw. Ausspritzöffnung bekannt, welches Schlauchansatzstück ein Innenrohr und ein gegenüber dem Innenrohr in axiale Richtung verstellbares, das Innenrohr an einem Ende desselben umgebendes Außenrohr aufweist, wobei das Innenrohr in diesem Ende einen Düsenzapfen und das Außenrohr korrespondierend dazu eine verengte Düsenöffnung, in die der Düsenzapfen einführbar ist, aufweist und weiter mit einer Ausströmöffnung, die gegenüber dem Düsenzapfen zurückgesetzt ist, versehen ist und im Bereich zwischen der Ausströmöffnung des Innenrohres und der Düsenöffnung eine den Durchtritt eines fließfähigen Mediums zur Düsenöffnung ermöglichende Passage zwischen Innenrohr und Außenrohr vorhanden ist, während hinter der genannten Ausströmöffnung Innenrohr und Außenrohr gegeneinander abgedichtet sind, und mindestens ein mit dem Innenrohr in Verbindung stehender, radial nach außen weisender Zapfen, Flügel od.dgl. vorgesehen ist, der in einen axial verlaufenden Führungsschlitz im Außenrohr eingreift und nach außen ragt und in diesen Führungsschlitz axial verschieblich ist, und eine Verstellhandhabe vorgesehen ist, die an dem aus dem Führungsschlitz ragenden Zapfen, Flügel od.dgl. angreift und mit der dieser Zapfen, Flügel od.dgl. und damit auch das Innenrohr gegenüber dem Außenrohr axial verschiebbar ist, wobei insbesondere dieses Schlauchansatzstück auch mit einem *am* düsenseitigen Ende angeordneten Außengewinde zum Zusammenfügen mit einer Durchflußwaschbürste od.dgl. versehen ist.

Aufgabe der Erfindung ist die Schaffung eines Wasch-

0110870

- 3 -

gerätes, welches einen mit wenigen Handgriffen durchführbaren Umbau ermöglicht, um Waschungen des Daches,
des Unterbodens oder der Seitenwände eines Fahrzeuges,
insbesondere großer Fahrzeuge, wie Busse etc. mit bequemer Haltung der Vorrichtung durchführen zu können.

Diese Aufgabe, welche mit den bekannten Vorrichtungen
nicht lösbar war, wird bei einer Vorrichtung der eingangs erwähnten Art dadurch gelöst, daß erfindungsgemäß bei einer Regulier- und Absperreinrichtung mit
im Winkel zueinander stehenden Ansatzstücken das Verlängerungsrohr an seinen Enden mit gleichartigen männlichen oder weiblichen Kupplungsteilen versehen ist,
so daß es wahlweise an das eine oder an das andere
Ansatzstück anschließbar ist.

Die Regulier- und Absperreinrichtung ist so ausgebildet, daß die Verstellhandhabe in Form einer mehrteiligen Hülse ausgebildet ist, die auf einem Außenrohr verdrehbar und gegen Axialverschiebung mindestens
in einer Richtung gesichert gelagert ist und die an
ihrer Innenseite mit einer wendelartigen Nut versehen
ist, in die ein Zapfen, Flügel od.dgl. eingreift, wobei ein hülsenartiger Teil der Hülse die auf einer
Nutseite liegende Stützfläche für den Zapfen, Flügel
od.dgl. trägt und ein anderer hülsenartiger Teil die
auf der anderen Nutseite liegende Stützfläche für
diesen Zapfen, und daß mindestens ein Führungsschlitz
im Außenrohr nach der vom düsenseitigen Ende abgewandten
Seite hin offen ist, um ein einfaches Einschieben des
mit Zapfen, Flügel(n) od.dgl. versehenen Innenrohrs in
das Außenrohr zu gestatten.

Durch diese Einrichtung wird somit eine Reguliereinrichtung geschaffen, bei welcher die gegenseitige Lage des Düsenzapfens und der Düsenöffnung verändert werden kann, und durch diese Veränderung kann der freie Durchtrittsquerschnitt der Düse entsprechend den jeweiligen Wünschen eingestellt, aber auch zur gänzlichen Hintanhaltung jeglichen Ausflusses, d.h. also zum Absperren, auf Null vermindert werden. Diese Waschvorrichtung eignet sich in erster Linie zum Waschen von Personenkraftwagen und größeren Fahrzeugen, wie z.B. Autobussen.

Die Reguliereinrichtung kann somit in vorteilhafter Weise z.B. am Ende eines mit dem Schlauch verbundenen Rohres angebracht werden und entweder zum Sprühen, oder mittels einer am Austrittsansatzstück angebrachten Waschbürste zum Dachreinigen eines Fahrzeuges, insbesondere eines Autobusses verwendet werden, wobei die Reguliereinrichtung auch zwischen dem Schlauch und dem Rohr angeordnet werden kann. Des weiteren kann die Reguliereinrichtung direkt am Gegenansatzstück des Schlauches angebracht sein und entweder zum Sprühen oder mittels einer am Austritts-Ansatzstück angebrachten Waschbürste zum Reinigen der von Hand aus zugänglichen Stellen des Fahrzeuges verwendet werden.

In Ausgestaltung der Erfindung ist vorgesehen, daß die Kupplungsteile in an sich bekannter Weise als Außen- und Innengewinde ausgebildet sind.

Die Kupplungsteile können aber auch als Bajonettverschlüsse, als Schnappverschlüsse od.dgl. ausgebildet sein, wodurch eine rasche und einfache Montage bzw. Demontage möglich ist.

Zur besseren Handhabung und Führung der Reguliereinrichtung ist vorgesehen, daß die Längsachsen der
Kupplungsteile der beiden Ansatzstücke zueinander
um einen Winkel $\alpha$ von 80 bis 120° abgewinkelt sind.

Weitere Merkmale und Einzelheiten der Erfindung werden
nachfolgend anhand der Figuren beschrieben. Es zeigen

Fig. 1 ein Ausführungsbeispiel einer für die erfindungsgemäße Waschvorrichtung bestimmten Reguliereinrichtung teilweise im Querschnitt,

Fig. 2 die Regeleinrichtung nach Fig. 1 in Verbindung
mit einem Rohr und einem Schlauch gemäß der vorliegenden Erfindung, und

Fig. 3 die Eintritts- und Austritts-Ansatzstücke mit
Innen- und Außengewinden, sowie die sich daraus ergebenden 25 Kombinationsmöglichkeiten.

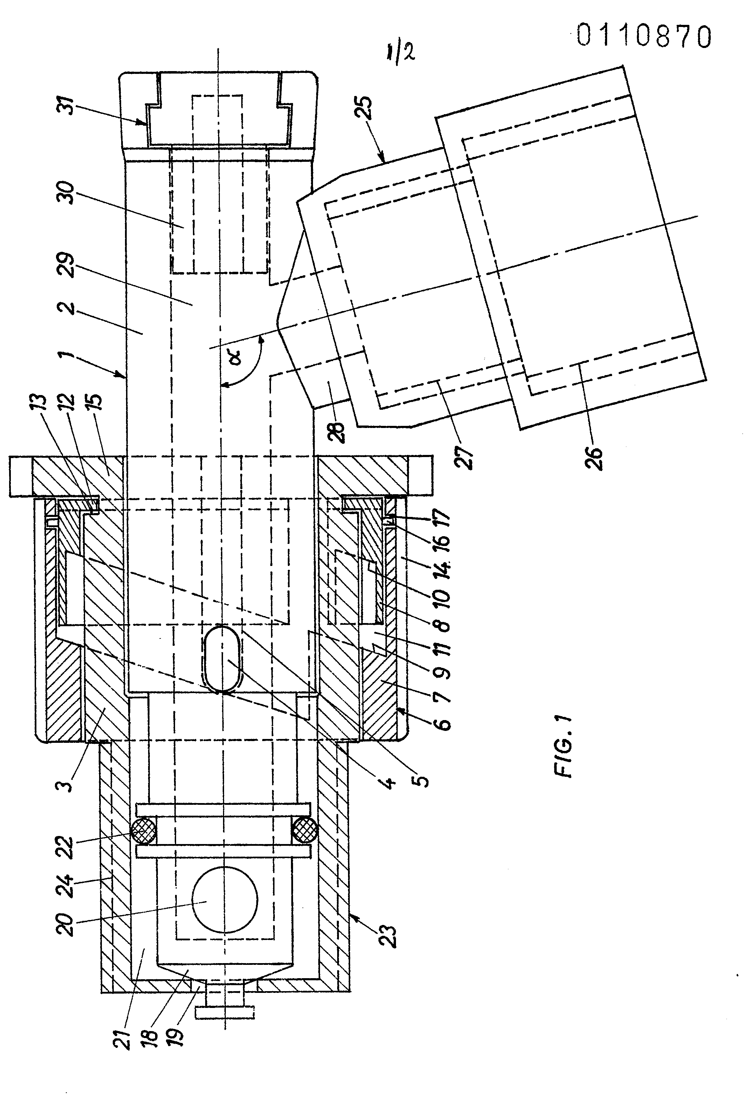

In Fig. 1 bzeichnet 1 eine modifizierte Reguliereinrichtung nach der AT-PS 332 186, bei welcher ein Innenrohr 2 vorgesehen ist, welches in einem Außenrohr 3
axial verschiebbar gelagert ist. Um dabei das Innenrohr 2 gegen Verdrehen gegenüber dem Außenrohr 3 zu
schützen und um das Innenrohr von außen axial verschieben zu können, sind am Innenrohr 2 zwei flügelartige Zapfen 4 vorgesehen, welche radial nach außen
abstehen. Diese Zapfen 4 greifen in axial verlaufende
Führungsschlitze 5, die im Außenrohr 3 angebracht sind,
ein und ragen durch diese Führungsschlitze 5 hindurch
nach außen. An dem nach außen ragenden Ende des jeweiligen Zapfens 4 greift eine Verstellhandhabe an, mit der der Zapfen 4 und damit auch das Innenrohr 2 gegenüber dem Außenrohr 3 axial verschiebbar ist. Die Verstellhandhabe ist dabei in Form einer auf dem Außenrohr 3 verdrehbar und gegen Axialverschiebung gesichert gelagerten Hülse 6 ausgebildet. Diese Hülse weist zwei miteinander in Verbindung stehende hülsenartige Teile 7, 8 auf, wobei jeder dieser Teile eine Stützfläche 9 bzw. 10 trägt, an der der Zapfen 4 zur Anlage kommt. Die beiden Stützflächen 9, 10 begrenzen dabei eine an der Innenseite der Hülse 6 liegende Nut 11, in die das Ende des betreffenden Zapfens 4 hineinragt. Solcherart sind beiderseits des Zapfens 4 Stützflächen vorhanden und es kann durch entsprechende Verstellung der Hülse 6 der in die Nut eingreifende Zapfen 4 sowohl in der einen als auch in der anderen Richtung axial verschoben werden. Im Zuge einer solchen Verstellbewegung wird die Hülse 6, die ihrerseits gegen Axialverschiebung durch einen nach innen weisenden Ansatz in Form eines einspringenden Randes 12, der in eine Nut 13 am Außenrohr 3 eingreift, gesichert ist, verdreht und es wandert dabei der Auflagepunkt des Zapfens 4 auf der jeweiligen Stützfläche und gleichzeitig erfährt der Zapfen 4 und damit auch das Innenrohr relativ gegenüber dem Außenrohr 3 eine Axialverschiebung. Um dabei eine sanfte und ruckfreie Verstellung des Innenrohrs 1 zu erhalten, sind die Stützflächen 9, 10 wendelartig ausgebildet. Die Hülse 6 trägt an ihrer Außenfläche Griffnuten 14, so daß sie leicht von Hand aus verdreht werden kann, und es ist zur weiteren Erleichterung der Bedienung des Regulierstücks 1 am Außenrohr 3 eine Haltehandhabe in Form eines Flansches 15 vorgesehen. Selbstverständlich können an Stelle des Randes 12 auch andere Ansätze, wie Stifte od.dgl. vorgesehen sein.

Die beiden hülsenartigen Teile 7, 8 der Hülse 6 sind
aneinander mittels einer Schnappverbindung fixiert,
welche aus Zapfen 16 am Teil 8 und entsprechenden
Eingriffsöffnungen 17 am Teil 7 besteht.

Das Innenrohr 2 weist an seinem in Fig. 1 links gelegenen Ende einen Düsenzapfen 18 auf, der in eine
verengte Düsenöffnung 19 des Außenrohrs 3 einführbar
ist. Weiters ist das Innenrohr 2 in der Nähe des
Düsenzapfens 18 mit einer Ausströmöffnung 20 versehen, wodurch zwischen dieser Ausströmöffnung 20
und der Düsenöffnung 19 eine, den Durchtritt der
dem Regulierstück zugeführten Flüssigkeit ermöglichende Passage 21 zwischen dem Innenrohr 2 und dem
Außenrohr 3 gebildet wird. Hinter der Ausströmöffnung
20 ist eine Dichtung 22 angeordnet, welche Innenrohr
und Außenrohr gegeneinander abdichtet, so daß ein
unerwünschtes Ausströmen der zugeführten Flüssigkeit
hintangehalten ist. Das Außenrohr bildet demnach ein
Austritts-Ansatzstück 23 und ist zu diesem Zwecke
beispielsweise mit einem Außengewinde 24 als Kupplungsteil versehen.

Am Innenrohr 2 ist auf der rechten Seite der Fig. 1
ein Eintritts-Ansatzstück 25 um einen Winkel $\alpha$ von
80 bis 120° zur Längsachse des Innenrohrs 2, bzw. des
Austritts-Ansatzstückes 23 abgewinkelt angebracht. Das
Eintritts-Ansatzstück weist als Kupplungsteil bzw.
-teile zwei Innengewinde 26, 27 unterschiedlichen
Gewindedurchmessers auf, die über eine Bohrung 28
mit der Bohrung 29 des Innenrohrs 2 verbunden sind.

Die Einzelteile der Reguliervorrichtung 1 sind bis
auf die Dichtung 22 vorzugsweise aus Kunststoff hergestellt. Aus Gründen der einfacheren Herstellung setzt sich das Innenrohr 2 in Fig. 1 nach der Einmündung der Bohrung 28 des Eintritts-Ansatzstückes 25 nach rechts fort, wobei ein Stopfen 30 die Bohrung 29 des Innenrohrs 2 dichtend abschließt, und der Stopfen 30 mittels eines Schnappverschlusses 31 am Innenrohr 2 befestigt ist.

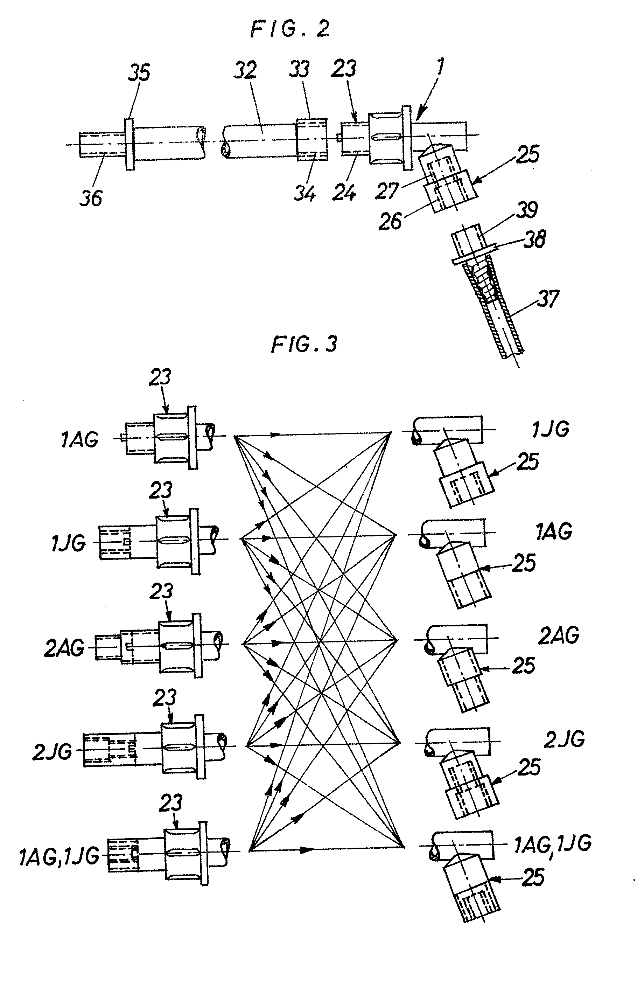

Fig. 2 zeigt Anwendungsmöglichkeiten der erfindungsgemäßen Reguliereinrichtung 1 nach Fig. 1.

Für die Dachwäsche eines Fahrzeuges wird ein, an einem Ende eines Rohrs 32 angeordneter Kupplungsteil 33 mit einem Innengewinde 34 am Außengewinde 24 des Austritts-Ansatzstücks 23 nach Fig. 1 angeschraubt. Am anderen Ende des Rohres 32 ist ein Kupplungsteil 35 mit einem Außengewinde 36 angeordnet, an welchem beispielsweise als Waschgerät (nicht dargestellt) eine Waschbürste angeschraubt werden kann. Ein am Schlauch 37 befestigter Kupplungsteil 38 trägt ein Außengewinde 39, welches in das größere Innengewinde 26 des Eintritts-Ansatzstückes 25 einschraubbar ist. Werden die einzelnen Elemente in dieser Weise verbunden, so kann die Reguliereinrichtung 1 beispielsweise mit der linken Hand, und das Rohr 32 mit der rechten Hand gehalten und geführt werden, wobei auch eine bequeme Einstellung der Durchflußmenge mittels der Reguliereinrichtung 1 gewährleistet ist.

Eine weitere Anwendungsmöglichkeit ergibt sich dadurch, daß das Rohr 32 zwischen dem Eintritts-Ansatzstück 25 und dem Schlauch 37 angeordnet wird, wobei das Außengewinde 36 des Kupplungsteiles 35 des Rohres 32 in das kleinere Innengewinde 27 des Eintritts-Ansatzstückes 25 eingeschraubt, und das Außengewinde 39 des Kupplungsteiles 38 des Schlauches 37 in das Innengewinde 34 des Kupplungsteils 33 des Rohrs eingeschraubt wird. Hiedurch ergibt sich die Möglichkeit, daß zuerst die Durchflußmenge einreguliert, und anschließend eine Sprühwäsche mit der am Ende des Rohrs 32 angebrachten Reguliereinrichtung 1 durchgeführt wird.

Eine dritte Anwendungsmöglichkeit ergibt sich dadurch, daß das Regulierstück 1 direkt am Schlauch 37 befestigt wird, und entweder zur Sprühwäsche dient, oder daß mittels eines am Regulierstück 1 befestigten Waschgeräts eine Wäsche vorgenommen wird. Diese Variante der Anordnung des Regulierstücks 1 am Schlauch 1 eignet sich insbesondere zur Reinigung der Seitenteile eines Fahrzeuges. Hiebei wird das Außengewinde 39 des Kupplungsteils 38 des Schlauchs 37 in das größere Innengewinde 26 des Eintritts-Ansatzstücks 25 eingeschraubt.

In Fig. 3 sind auf der linken Seite die Möglichkeiten der Ausbildung des Austritts-Ansatzstücks 23, und auf der rechten Seite die Möglichkeiten der Ausbildung des Eintritts-Ansatzstücks 25 dargestellt, wobei jeweils ein Außengewinde (1AG), ein Innengewinde (1JG), zwei Außengewinde (2AG), zwei Innengewinde (2JG), oder ein Außengewinde und ein Innengewinde (1AG, 1JG) vorgesehen werden kann. Hiedurch ergeben sich 25 Kombinationsmöglichkeiten, die durch Pfeile angedeutet sind. Es versteht sich, daß anstelle von Gewinden als Kupplungsteile auch andere Verbindungselemente, wie Bajonettverschlüsse, Schnappverschlüsse od.dgl. in Kombination, wie in Fig. 3 dargestellt, verwendet werden können. Es ergeben sich insgesamt 25 Kombinationsmöglichkeiten.

Patentansprüche

1. Waschvorrichtung mit einer Flüssigkeitsregulier- und Absperreinrichtung und einem an diese angeschlossenem Leitungsrohr, wobei die Regulier- und Absperreinrichtung ein Eintritts-Ansatzstück und ein Austritts-Ansatzstück für die Flüssigkeitszufuhr und -abfuhr aufweist, welche beiden Ansatzstücke jeweils mit zumindest einem männlichen und/oder weiblichen Kupplungsteil versehen sind und wobei das Austritts-Ansatzstück gegebenenfalls als Sprühdüse ausgebildet ist, dadurch gekennzeichnet, daß bei einer Regulier- und Absperreinrichtung mit im Winkel zueinander stehenden Ansatzstücken (23, 25) das Verlängerungsrohr (32) an seinen Enden mit gleichartigen männlichen oder weiblichen Kupplungsteilen versehen ist, so daß es wahlweise an das eine oder an das andere Ansatzstück (23, 25) anschließbar ist.

2. Waschvorrichtung nach Anspruch 1, dadurch gekennzeichnet, daß die Kupplungsteile als Außen- und Innengewinde (AG, JG) ausgebildet sind.

3. Waschvorrichtung nach Anspruch 1, dadurch gekennzeichnet, daß zumindest eines der beiden Ansatzstücke (23, 25) mit zwei Kupplungsteilen verschiedenen Außendurchmessers versehen ist.

4. Waschvorrichtung nach Anspruch 1, dadurch gekennzeichnet, daß zumindest eines der beiden Ansatzstücke (23, 25) mit zwei Kupplungsteilen verschiedenen Innendurchmessers versehen ist.

5. Waschvorrichtung nach Anspruch 1, dadurch gekennzeichnet, daß das Eintritts-Ansatzstück mit einem Innengewinde und das Austritts-Ansatzstück mit einem Außengewinde versehen ist.

6. Waschvorrichtung nach Anspruch 1, dadurch gekennzeichnet, daß das Eintritts-Ansatzstück mit zwei Innengewinden unterschiedlichen Gewindedurchmessers und das Austritts-Ansatzstück mit einem Außengewinde versehen ist.

7. Waschvorrichtung nach Anspruch 1, dadurch gekennzeichnet, daß die Längsachsen der Kupplungsteile der beiden Ansatzstücke zueinander um einen Winkel $\alpha$ von 80 bis 120° abgewinkelt sind.

FIG. 1

1/2

0110870

FIG. 2

FIG. 3